## Europäisches Patentamt
## European Patent Office
## Office européen des brevets

(11) Publication number: **0 144 328**
**B1**

(12) **EUROPEAN PATENT SPECIFICATION**

(45) Date of publication of patent specification: **27.12.90**

(21) Application number: **84901075.6**

(22) Date of filing: **15.03.84**

(86) International application number:
**PCT/EP84/00078**

(87) International publication number:
**WO 84/03666 27.09.84 Gazette 84/23**

(51) Int. Cl.⁵: **B 60 D 1/06**

(54) **DETACHABLE TOWING BRACKET.**

(30) Priority: **21.03.83 NL 8300996**

(43) Date of publication of application:
**19.06.85 Bulletin 85/25**

(45) Publication of the grant of the patent:
**27.12.90 Bulletin 90/52**

(84) Designated Contracting States:
**AT BE CH DE FR GB LI LU NL SE**

(56) References cited:
**EP-A-0 037 572**
**FR-A-2 348 073**
**FR-A-2 359 000**
**FR-A-2 416 807**
**FR-A-2 442 151**
**FR-A-2 459 148**
**GB-A-1 497 122**

(73) Proprietor: **TOBO MADE B.V.**
**2e Industrieweg 3**
**NL-4921 XH Made (NL)**

(72) Inventor: **SCHOLTE, Bob**
**Gasthuisstraat 152**
**NL-5104 HT Dongen (NL)**

(74) Representative: **de Boer, Hindrik Geert Jan et al**
**de Boer & Wigman P.O. Box 5265 De**
**Lairessestraat 131-135**
**NL-1007 AG Amsterdam (NL)**

Courier Press, Leamington Spa, England.

## Description

The invention relates to a detachable towing bracket for a vehicle, in particular for an automobile, in which the towing hook with a first coupling member can be slid vertically upwards and thus become detached from a second coupling member with fittings to be attached to the vehicle, and in which the first coupling member, when slid vertically downwards, is arrested in place by a locking pin which is provided with a tapering end, is fitted on the first coupling member and runs substantially crosswise of the second coupling member into a receiving bore, whilst the coupling members can be linked together by means of a dovetailed joint.

Such a towing bracket is known from the French patent specification No. 2.348.073 which describes a number of embodiments for the coupling members relating in the main to prismatic vertical and horizontal dovetail joints. Figure 15 of this French patent specification shows an embodiment whereby a locking pin with a tapering end can be fitted on the first coupling member thus running crosswise of the second coupling member into a receiving bore.

A disadvantage of a towing bracket according the French specification No. 2.348.073 is that no ideal locking of its two coupling members without any clearance is provided, and that the second coupling member has a complicated construction, which makes it difficult to clean, for example when the first coupling member is non-operative.

It is an object of the present invention to ameliorate this situation.

To this end, a towing bracket of the kind mentioned in the preamble is characterized in that the coupling members have been designed as a trapezoid plates whereby the raised edges of the second trapezoid coupling member approximately taper with respect to each other, and the dovetailed groove-forming edges of the first coupling member taper correspondingly, that the second coupling member is a flat plate and that this flat plate forms the part of the coupling to be attached to the automobile, and that the locking pin is forced under spring tension into locked position in such a fashion that with the towing bracket in coupled position the locking pin runs eccentrically relative to the bore in the second coupling member. In all circumstances it is guaranteed that the two coupling members are connected to each other without any clearance in all directions.

An embodiment of the towing bracket according to the invention is characterized in that the locking pin is accommodated in a barrel attached to the first coupling member which supports the towing hook and at a point below this towing hook, whilst the centre line of the locking pin shows a slight downward gradient in the locking direction. In this way, there is no chance that the locking pin will be lost. When the first coupling member is non-operative, the second coupling member — being a simple trapezoidal plate — can be cleaned easily.

A further embodiment of the towing bracket according to the invention is characterized in that provision is made for a locking member which is undetachably fastened to one of the coupling members in such a way that the locking pin can be secured in the locked position in a manner visible from the outside. The locking member, such as a locking pin, can, for example, be safeguarded against loss by means of a chain which is attached to the first coupling member.

The French patent specification No. 2.359.000 describes a detachable towing bracket for a vehicle, in which the towing hook with a first coupling member can be slid vertically upwards and thus become detached from a second coupling member to be attached to the vehicle, which second coupling member is a rectangular plate with a trapezoidal outcut. The edges of this trapezoidal outcut approximately taper in cross-section, whilst the edges of the first coupling member taper correspondingly in cross-member are, however, not linked together during operation by means of a dovetailed joint. The second coupling member has a very complicated construction, which makes it difficult to clean, for example when the first coupling member is non-operative.

Further particles of the invention will emerge from the following 5 description of a few embodiments given by way of example with reference to the accompanying drawings, in which

Figure 1 is a lateral view of an embodiment of the detachable towing bracket, with the first and the second coupling member;

Figure 2 is a view of the first coupling member in the direction of the line II—II in Figure 1;

Figure 3 is a lateral view of the second coupling member mounted on the vehicle;

Figure 4 is a view of the second coupling member in the direction of line IV—IV in Figure 3;

Figure 5 is a cross-sectional view in the direction of line V—V in Figure 2;

Figure 6 is a lateral view of an alternative embodiment of the detachable towing bracket with the first and the second coupling member;

Figure 7 is a view in the direction of line VII—VII in Figure 6. The detachable towing bracket according to Figure 1 substantially comprises the first coupling member 1 with the coupling bar or coupling ball 2 and the second coupling member 3 (dashed line).

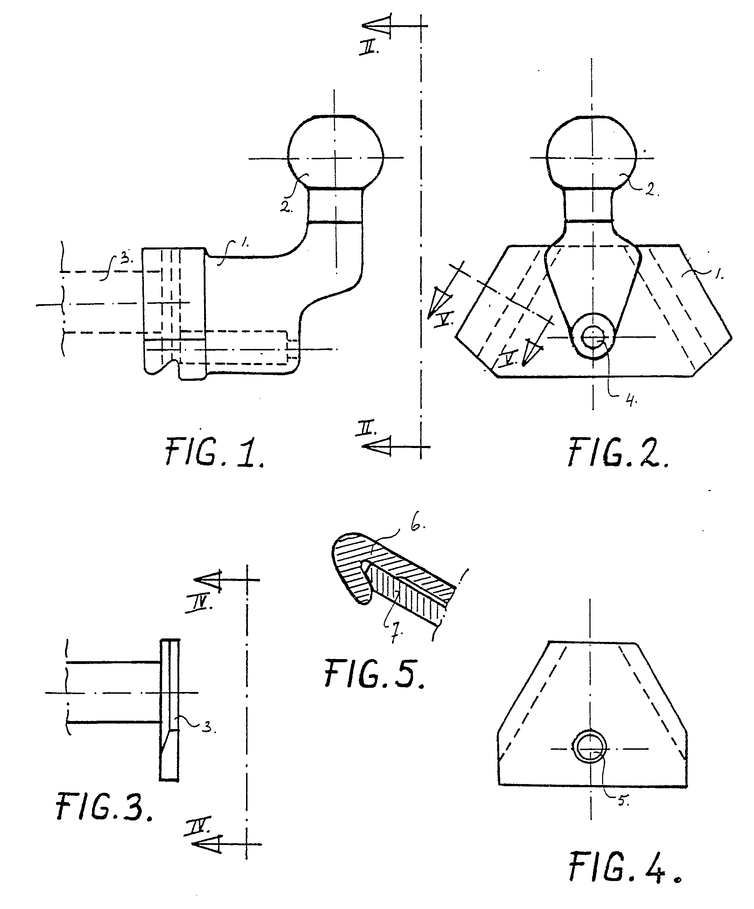

Figure 2 depicts the first coupling member 1 with the coupling bar or ball 2 in front elevation viewed in the direction of line II—II. Also represented is the bore 4 for the locking pin.

Figure 3 represents a lateral view of the second coupling member 3, and Figure 4 a front view of the same coupling member 3 in the direction of line IV—IV, including the bore 5 for receiving the locking pin.

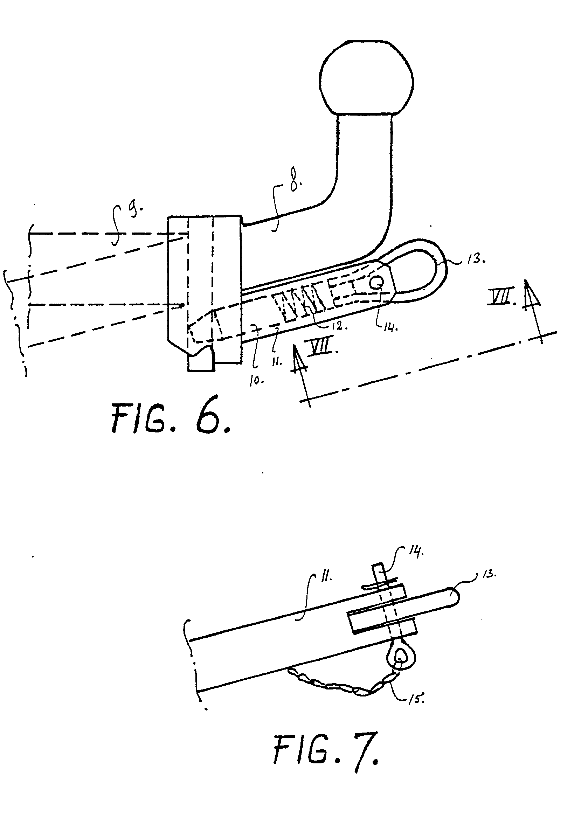

Figure 5 is a cross-sectional representation of the dovetailed groove-forming edge 6 of the first coupling member 1. The dovetailed groove-forming edge 6 clasps the corresponding tapering edge 7 of the second coupling element 3.

Figure 6 presents a lateral view of an alternative embodiment of the detachable towing bracket with the first coupling member 8 and the second coupling member 9 (dashed line). It also depicts in lateral view the locking pin 10 in locked position together with the barrel 11, the spring 12 and the handling lug 13. The locking pin 10 is secured in position with a bolt pin 14.

Figure 7 presents a front view of the bolt pin 14 in the direction of line VII—VII in Figure 6, showing that pin 14 is safeguarded against loss by means of a chain 15 which is attached to the first coupling member 8.

## Claims

1. A detachable towing bracket for a vehicle, in particular for an automobile, in which the towing hook with a first coupling member (1, 8) can be slid vertically upwards and thus becomes detached from a second coupling member (3, 9) with fittings to be attached to the vehicle, and in which the first coupling member (1, 8), when slid vertically downwards, is arrested in place by a locking pin (10) which is provided with a tapering end, is fitted on the first coupling member (1, 8) and runs substantially crosswise of the second coupling member into a receiving bore, whilst the coupling members (1, 8, 3, 9) can be linked together by means of a dovetailed joint, characterized in that the coupling member (1, 8, 3, 9) have been designed as trapezoid plates whereby the raised edges (7) of the second trapezoid coupling member (3, 9) approximately taper with respect to each other, and the dovetailed groove-forming edges (6) of the first coupling member (1, 8) taper correspondingly, that the second coupling member (3, 9) is a flat plate and that this flat plate forms the part of the coupling to be attached to the automobile, and that the locking pin (10) is forced under spring (12) tension into locked position in such a fashion that with the towing bracket in coupled position the locking pin (10) runs eccentrically relative to the bore in the second coupling member (3, 9).

2. A towing bracket according to claim 1, characterized in that the locking pin (10) is accommodated in a barrel (11) attached to the first coupling (1, 8) member which supports the towing hook and at a point below this towing hook, whilst the centre line of the locking pin (10) shows a slight downward gradient in the locking direction.

3. A device according to claim 1 or 2, characterized in that provision is made for a locking member (14) which is undetachably fastened to one of the coupling members (1, 8, 3, 9) in such a way that the locking pin (10) can be secured in the locked position in a manner visible from the outside.

## Patentansprüche

1. Abnehmbare Anhängekupplung für ein Fahrzeug, insbesondere für ein Automobil, bei der der mit einem ersten Verbindungsstück verbundene Schlepphaken (1, 8) senkrecht aufwärts verschoben und auf diese Art und Weise von einem zweiten, mit Montageelementen zur Verbindung mit dem Fahrzeug versehenen Verbindungsstück (3, 9) abgenommen werden kann, und bei der das senkrecht abwärts verschobene erste Verbindungsstück (1, 8) durch ein Verriegelungszapfen (10) an seiner Stelle gehalten wird, der ein sich verjüngendes Ende aufweist und im wesentlichen quer durch das zweite Verbindungsstück verläuft und in einer Bohrung aufgenommen wird, während die Verbindungsstücke (1, 8, 3, 9) miteinander durch eine schwalbenschwanzähnliche Verbindung verbunden werden können, dadurch gekennzeichnet, daß die Verbindungsstücke (1, 8, 3, 9) als trapezförmige Scheiben ausgebildet sind, wobei die erhabenen Kanten (7) des zweiten trapezförmigen Verbindungsstückes (3, 9) sich in Bezug aufeinander verjüngen und die schwalbenschwanzartig ausgebildeten, nutbildenden Kanten (6) des ersten Verbindungsstückes (1, 8) sich entsprechend verjüngen, daß daß das zweite Verbindungsstück (3, 9) eine flache Scheibe ist, wobei diese flache Scheibe eine Teil des mit dem Automobil verbundenen Verbindungsstückes bildet, und daß der Verriegelungszapfen (10) dergestalt unter der Kraft einer Feder (12) in die Schließstellung gedrückt wird, daß der Verriegelungszapfen (10) relativ zu der Bohrung im zweiten Verbindungsstück (3, 9) exzentrisch verläuft, wenn die Anhängekupplung an das Fahrzeug angehängt ist.

2. Anhängekupplung nach Anspruch 1, dadurch gekennzeichnet, daß der Verriegelungszapfen (10) in einer mit dem ersten Verbindungsstück (1, 8) verbundenen und unterhalb des Schlepphakens angeordneten Hülse (11) gelagert ist, wobei die Achse des Verriegelungszapfens (10) in Verriegelungsrichtung leicht abwärts geneigt ist.

3. Vorrichtung nach einem der Ansprüche 1 oder 2, dadurch gekennzeichnet, daß ein Verriegelungsmittel (14) unverlierbar mit einem der Verbindungsstücke (1, 8, 3, 9) dergestalt verbunden ist, daß der Verriegelungszapfen (10) in der Verriegelungsstellung in einer von außen sichtbaren Art und Weise gesichert werden kann.

## Revendications

1. Support de remorquage détachable pour un véhicule, en particulier pour une automobile, dans lequel le crochet de remorquage avec un premier élément de couplage (1, 8) peut être glissé verticalement vers le haut et ainsi se trouver détaché d'un second élément de couplage (3, 9) avec des accessoires qui doivent être fixés au véhicule et dans lequel le premier élément de couplage (1, 8), lorsqu'il est glissé verticalement vers le bas, est maintenu en place par une broche de verrouillage (10) qui est prévue avec une extrémité convergente, est adaptée sur le premier élément de couplage (1, 8) et s'étend sensiblement perpendiculairement par rapport au second élément de couplage vers un alésage récepteur, alors que les éléments de couplage (1, 8, 3, 9) peuvent être reliés entre eux au moyen d'un joint en queue d'aronde, caractérisé en ce que les éléments de couplage (1, 8, 3, 9) ont été conçus sous la forme de plaques trapézoïdales grâce auxquelles les bords en saillie (7) du second élément de couplage trapézoïdal (3, 9) vont approximativement en convergeant l'un par rapport à l'autre et les bords formant gorge en forme de queue d'aronde (6) du premier élément de couplage (1, 8) vont en convergeant de façon correspondante, en ce que le second élément de couplage (3, 9) est une plaque plane et ce que cette plaque plane constitue la partie du couplage qu'il y a lieu de fixer à une automobile et en ce que la broche de verrouillage (10) est sollicitée sous l'action d'un ressort de traction (12) en position de verrouillage de telle sorte qu'avec le support de remorquage en position couplée, la broche de verrouillage (10) s'étend de façon excentrique par rapport à l'alésage dans le second élément de couplage (3, 9).

2. Support de remorquage selon la revendication 1, caractérisé en ce que la broche de verrouillage (10) est reçue dans un cylindre (11) qui est fixé au premier élément de couplage (1, 8) qui supporte le crochet de remorquage et en un point qui se trouve en-dessous de ce crochet de remorquage, alors que la ligne centrale de la broche de verrouillage (10) présente un gradient léger vers le bas dans la direction de verrouillage.

3. Dispositif selon la revendication 1 ou la revendication 2, caractérisé en ce qu'il est prévu un élément de verrouillage (14) qui est fixé de façon non-amovible à l'un des éléments de couplage (1, 8, 3, 9) d'une façon telle que la broche de verrouillage (10) peut être fixée dans la position verrouillée d'une façon visible à partir de l'extérieur.

FIG. 1.

FIG. 2.

FIG. 3.

FIG. 5.

FIG. 4.

FIG. 6.

FIG. 7.

2